(19) Europäisches Patentamt / European Patent Office / Office européen des brevets

(11) **EP 3 143 656 B1**

(12) **EUROPÄISCHE PATENTSCHRIFT**

(45) Veröffentlichungstag und Bekanntmachung des Hinweises auf die Patenterteilung:
**16.05.2018   Patentblatt 2018/20**

(21) Anmeldenummer: **15762512.0**

(22) Anmeldetag: **26.08.2015**

(51) Int Cl.:
*H01M 4/134* (2010.01)    *H01M 4/38* (2006.01)
*H01M 4/62* (2006.01)    *C08F 218/14* (2006.01)
*C09D 129/14* (2006.01)    *H01M 4/1395* (2010.01)

(86) Internationale Anmeldenummer:
**PCT/EP2015/069502**

(87) Internationale Veröffentlichungsnummer:
**WO 2016/034464 (10.03.2016 Gazette 2016/10)**

(54) **POLYMERZUSAMMENSETZUNG ALS BINDERSYSTEM FÜR LITHIUMIONENBATTERIEN**

POLYMER COMPOSITION AS A BINDER SYSTEM FOR LITHIUM-ION BATTERIES

COMPOSITION POLYMÈRE UTILISÉE COMME SYSTÈME DE LIANT POUR BATTERIES À IONS LITHIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2014   DE 102014217727**

(43) Veröffentlichungstag der Anmeldung:
**22.03.2017   Patentblatt 2017/12**

(73) Patentinhaber: **Wacker Chemie AG**
**81737 München (DE)**

(72) Erfinder:
• **BRUCKMEIER, Christian**
**80805 München (DE)**
• **DEUBEL, Frank**
**80939 München (DE)**
• **HAUFE, Stefan**
**85579 Neubiberg (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**JP-A- H06 223 842**

• **ZHAO HUI ET AL: "A polymerized vinylene carbonate anode binder enhances performance of lithium-ion batteries", JOURNAL OF POWER SOURCES, ELSEVIER SA, CH, Bd. 263, 24. April 2014 (2014-04-24), Seiten 288-295, XP029026332, ISSN: 0378-7753, DOI: 10.1016/J.JPOWSOUR.2014.04.063 in der Anmeldung erwähnt**

**Beschreibung**

Die Erfindung betrifft eine Elektrodenbeschichtung für eine Lithium-Ionen-Batterie, die ein Copolymer aus vinylfunktionellem zyklischem Carbonat und Acrylsäure bzw. Acrylsäurederivaten enthält.

Lithium-Ionen-Batterien gehören aufgrund ihrer hohen Energiedichten zu den aussichtsreichsten Energiespeichern für mobile Anwendungen. Die Einsatzgebiete reichen dabei von hochwertigen Elektronikgeräten bis hin zu Batterien für Kraftfahrzeuge mit Elektroantrieb und stationäre Stromspeicher.

Die Entwicklung leistungsfähigerer Anodenmaterialien für Li-Ionenbatterien erfordert gleichzeitig die Entwicklung kompatibler Bindersysteme. Das für Graphitelektroden eingesetzte PVDF ist für den Einsatz in Silizium-haltigen Elektroden aufgrund chemischer und mechanischer Instabilität nicht geeignet. Dies äußert sich in schlechtem elektrochemischem Zyklenverhalten.
Um die extreme Volumenänderung (bis ca. 300%), die das Silizium bei Lithiierung/Delithiierung erfährt, und die damit verbundene mechanische Beanspruchung abzufangen, werden alternativ wässrig verarbeitbare Bindersysteme wie beispielsweise NatriumCarboxymethylcellulose (Na-CMC), Polyvinylalkohole, Acrylate oder auch Mischungen von Na-CMC mit Styrol-Butadien-Kautschuken beschrieben.
Standardbindersysteme weisen häufig einen hohen Kapazitätsverlust über die Lade- und Entladezyklen auf, insbesondere bei hohen Flächenbeladungen. Insbesondere tritt währen der Lade- und Entladezyklen ein hoher irreversibler Kapazitätsverlust auf. Als ursächlich hierfür werden häufig Elektrolytzersetzung und ein dadurch bedingter starker Anstieg des Innenwiderstandes diskutiert (Zhao et al., Journal of Power Sources (2014) 263, 288 - 295)

In Anoden für Lithium-Ionen-Batterien, in denen das Elektrodenaktivmaterial auf Silicium als Material mit der höchsten bekannten Speicherkapazität für Lithium-Ionen basiert, erfährt das Silicium beim Laden bzw. Entladen mit Lithium eine extreme Volumenänderung um ca. 300%. Durch diese Volumenänderung kommt es zu einer starken mechanischen Beanspruchung der gesamten Elektrodenstruktur, die zur elektronischen Dekontaktierung des Aktivmaterials und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlichem, irreversiblen Lithium-Verlust unter (nach-) Bildung passivierender Schutzschichten (Solid Electrolyte Interface; SEI).
Um diese speziell für Si-basierte Anoden bekannten Probleme zu lösen, wurden in den letzten Jahren verschiedene Ansätze zur elektrochemischen Stabilisierung Si-basierter Elektrodenaktivmaterialien verfolgt (A.J. Appleby et al., J. Power Sources 2007, 163, 1003-1039).

In Hinblick auf Anwendungen in der Elektromobilität ist die Forderung nach hoher Reversibilität bei hohen Zyklenzahlen (>100 Zyklen) und hohen Beladungen (>2 mAh/cm$^2$) nach wie vor die größte Herausforderung.

Neben den Themen der Dekontaktierung durch Binderschwäche, spielt bei hohen Zyklenzahlen insbesondere die Elektrolytzersetzung eine wichtige Rolle. Im Laufe zahlreicher Zyklen führt dies zum Abfallen der Kapazität aufgrund ansteigender Widerstände bis hin zum sogenannten Trockenlaufen der Zelle.
Neben speziellen Elektrolyten spielt hierbei auch der Binder eine wichtige Rolle und muss entsprechend angepasst werden, um im Zusammenspiel mit weiteren Verbesserungen wie geeigneten Additiven und verbesserten Elektrolyten den Einsatz von Siliciumanoden in Lithiumionenbatterien für insbesondere Automobilanwendungen zu ermöglichen.

PVdF als Standardbinder, wie er bei klassischen Graphitanoden Anwendung findet, ist im Falle siliciumhaltiger Anoden unzureichend.

Zhao et al.(Journal of Power Sources (2014) 263, 288 - 295) beschrieben die Verwendung von polymerem Vinylencarbonat (PolyVC) als Binder für Graphitanoden. PolyVC wurde bereits in Vorarbeiten als die primäre SEI Komponente an Graphitanoden identifiziert (J. Electrochem. Soc. 156 (2009) A103-A113) In Arbeiten von Zhao et al. konnte gezeigt werden, dass PolyVC die SEI Bildung unterstützt und die Elektrolytzersetzung reduziert. Geringere Elektrolytzersetzung führt dabei zu einer dünneren SEI und damit zu einem langsameren Anstieg des Innenwiderstands während des Zyklisierens. Auf diese Weise erreicht man eine höhere Kapazitätsretention bei hohen Zyklenzahlen.

Die Anwendung von PolyVC als Binder wie er in dem oben genannten Beispiel für Graphitanoden verwendet wird, ist nicht auf Siliciumanoden übertragbar. Aus nicht geklärten Gründen führt PolyVC bei Kombination mit Silicium als Anodenaktivmaterial zu einem raschen Einbruch der Zyklenstabilität.

Die Copolymerisation von VC mit Acrylsäure und Methacrylsäure wurde von Baskova et al. beschrieben (Vysokomolekulyarnye Soedineniya, Seriya B: Kratkie Sooshcheniya (1968), 10(3), 220-2), die Copolymerisation von VC mit (Meth)acrylsäureestern findet sich beispielsweise bei Smets et al (Jour. Pol. Sci., Vol 27, pp 275-283 (1958)).

Copolymere von Vinylencarbonat und (Meth)acrylsäureestern finden bisher in Lithium-Ionen-Batterien lediglich als in der Zelle in-situ polymerisierter Elektrolytbestandteil Verwendung (US2004/0126668 A1), nicht jedoch als Binder für das Anodenmaterial.

JP H06 223842 A beschreibt eine Elektrodenbeschichtung für eine Lithium-Ionen-Batterie, welche ein Copolymer, herstellbar durch Polymerisation von zusammen mehr als 70% Gew.-% an vinylfunktionellem zyklischem Carbonat und einem oder mehreren Monomeren aus der Gruppe der Acrylsäure und deren Derivaten, wobei der Gewichtsanteil an vinylfunktionellem zyklischem Carbonat bezogen auf das Gewicht aller eingesetzten Monomere 5 - 90% beträgt, oder das Salz davon enthält.

Gegenstand der Erfindung ist eine Elektrodenbeschichtung für eine Lithium-Ionen-Batterie, welche Copolymer C, herstellbar durch Polymerisation von zusammen mehr als 70% Gew.-% an vinylfunktionellem zyklischem Carbonat und einem oder mehreren Monomeren aus der Gruppe der Acrylsäure und deren Derivaten, wobei der Gewichtsanteil an vinylfunktionellem zyklischem Carbonat bezogen auf das Gewicht aller eingesetzten Monomere 5 - 90% beträgt, oder das Salz davon enthält, wobei die Elektrodenbeschichtung das Aktivmaterial Silicium enthält.

Copolymer C ist vorzugsweise herstellbar durch radikalisch initiierte Polymerisation.

Derivate der Acrylsäure sind insbesondere Ester der Acrylsäure, Alkali- und Erdalkalisalze der Acrylsäure oder Methacrylsäure und deren Ester und deren Alkali- oder Erdalkalisalze oder Crotonsäure und deren Ester und deren Alkali- und Erdalkalisalze, oder Butendisäure (= Fumarsäure oder Maleinsäure) und dessen Anhydrid (= Maleinsäureanhydrid) und deren Ester und deren Alkali- oder Erdalkalisalze.

Geeignete Ester der Acrylsäure und Acrylsäurederivate sind beispielsweise Ester von unverzweigten oder verzweigten Alkoholen mit 1 bis 15 C-Atomen. Bevorzugte Ester sind dabei Methacrylsäureester oder Acrylsäureester, insbesondere Methylacrylat, tert-Butylacrylat, tert-Butylmethacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Der Gewichtsanteil an Acrylsäure und Acrylsäurederivaten bezogen auf das Gewicht aller eingesetzten Monomere beträgt bevorzugt 10 - 95%, besonders bevorzugt 30 - 85%, insbesondere 70 - 40%.

Geeignete vinylfunktionelle zyklische Carbonate sind beispielsweise Vinylencarbonat (1,3-Dioxol-2-on, kurz VC), 4-Methylvinylencarbonat, 4,5-Dimethylvinylencarbonat, Vinylethylencarbonat (4-vinyl-1,3-dioxolan-2-on), 4-Chlorvinylencarbonat, 4,5- Dichlorvinylencarbonat, 4-Fluorovinylencarbonat, 4,5-Difluorovinylencarbonat, Methylenethylencarbonat (4-Methylen-1,3-dioxolan-2-on) und 4-Hydroxymethyl-Vinylencarbonat.

Besonders bevorzugt als vinylfunktionelles zyklisches Carbonat ist Vinylencarbonat, der einfachste ungesättigte cyclische Kohlensäureester.

Der Gewichtsanteil an vinylfunktionellen zyklischen Carbonaten bezogen auf das Gewicht aller eingesetzten Monomere beträgt bevorzugt 15 - 70%, besonders bevorzugt 30 - 60%.

Wenn Copolymer C durch Einsatz von weiteren Monomeren herstellbar ist, dann werden diese weiteren Monomeren, die weniger als 30 Gew.-% Monomeren oder bevorzugt weniger als 5 Gew.-% der Monomeren ausmachen, bevorzugt ausgewählt aus N-Methylolacrylamid, Butadien, Ethylen, Acrylnitril, Styrol, Ethylenglycoldiacrylat und Hexamethylendiacrylat.

Das Zahlenmittel des Molekulargewichts des Copolymers C beträgt bevorzugt Mn = 500 - 30000, insbesondere 1000 - 10000. (Bestimmung mittels Size Exclusion Chromatography (SEC) gegen Polystyrol-Standard, in DMF/Methanol (Volumenanteile 1/1 + 1 g/l Ammoniumformiat), bei 35°C, Flow Rate 0,5 ml/min und Detektion mit RI (Brechungsindex-Detektor) auf einer Polargel Säule von Agilent (Injektionsvolumen 20 $\mu$l)).

Bevorzugt wird das Copolymer C als Alkali- oder Erdalkalisalz eingesetzt. Bevorzugt sind dabei das Natrium- oder Lithiumsalz, besonders bevorzugt das Natriumsalz.

Dabei können beispielsweise die Monomere bereits als Natriumsalz eingesetzt werden oder in einer bevorzugten Ausführung entsprechende Anteile der Monomereinheiten der Acrylsäure oder Acrylsäurederivate im fertigen Copolymer durch Zugabe von Natrium- bzw. Lithiumhydroxid in das Natrium- bzw. Lithiumsalz überführt werden. Bevorzugt werden 5 - 80% , besonders bevorzugt 10 - 50%, insbesondere bevorzugt 20 - 40% (= Molprozent) der Acrylsäure bzw. der Acrylsäurederivate Monomereinheiten im Copolymer C durch Zugabe von Natrium- bzw. Lithiumhydroxid in das Natrium- bzw. Lithiumsalz überführt.

Das Copolymer C dient in der Elektrodenbeschichtung als Bindemittel.

Bei der Herstellung der Elektrodenbeschichtung wird vorzugsweise eine Elektrodentinte, welche auch Elektrodenpaste genannt wird, in einer Trockenschichtdicke von 2 $\mu$m bis 500 $\mu$m, bevorzugt von 10 $\mu$m bis 300 $\mu$m, insbesondere bevorzugt 50 - 300 $\mu$m auf einen Stromsammler, beispielsweise Kupferfolie aufgetragen, vorzugsweise aufgerakelt.

Andere Beschichtungsverfahren, wie Rotationsbeschichtung (Spin-Coating), Tauchbeschichtung, Streichen, oder Sprühen können ebenso verwendet werden. Vor dem Beschichten der Kupferfolie mit der Elektrodentinte kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Die Elektrodentinte wird vorzugsweise bis zur Gewichtskonstanz getrocknet. Die Trocknungstemperatur richtet sich nach den eingesetzten Materialien und dem verwendeten Lösungsmittel. Sie liegt bevorzugt zwischen 20° C und 300° C, besonders bevorzugt zwischen 50° C und 150° C.

Abschließend können die Elektrodenbeschichtungen kalandriert werden, um eine definierte Porosität einzustellen.

Die Kapazität pro Fläche der Elektrodenbeschichtung beträgt vorzugsweise >1,5 mAh/cm$^2$, besonders bevorzugt >2 mAh/cm$^2$.

Die Elektrodenbeschichtung und Elektrodentinte enthalten das Copolymer C und ein oder mehrere Aktivmaterialien.

Das Aktivmaterial für die Elektrodenbeschichtung und Elektrodentinte enthält Elemente und deren Verbindungen, die ausgewählt werden aus Kohlenstoff, Silicium, Lithium, Zinn, Titan und Sauerstoff. Das Aktivmaterial für die Elektrodenbeschichtung enthält Silicium.

Bevorzugte Aktivmaterialien sind Silicium, Siliciumoxid, Graphit, Silicium-Kohlenstoff-Komposite, Zinn, Lithium, Aluminium, Lithiumtitanoxid und Lithiumsilicid. Insbesondere bevorzugt sind Graphit und Silicium sowie Silicium-Kohlenstoff-Komposite.

Die Primärpartikelgröße des Siliciums als Aktivmaterial beträgt vorzugsweise 1-1000nm, bevorzugt 50-300nm. Der Anteil des Siliciums am Aktivmaterial beträgt bevorzugt 5 - 90 Gew.-%, besonders bevorzugt 5 - 40 Gew.-%. Der Anteil des Graphits am Aktivmaterial beträgt bevorzugt 10 - 95 Gew.-%, besonders bevorzugt 60 - 95 Gew.-%.

Darüber hinaus können in der Elektrodentinte und Elektrodenbeschichtung weitere leitfähige Materialien, wie z.B. Leitruß, Kohlenstoffnanoröhren (CNT) und Metallpulver enthalten sein.

Die Elektrodentinte und Elektrodenbeschichtung können noch weitere Additive enthalten, die insbesondere zur Einstellung der Benetzungseigenschaften oder zur Erhöhung der Leitfähigkeit dienen, sowie Dispergiermittel, Füllstoffe und Porenbildner.

Die Elektrodentinte enthält als Lösungsmittel vorzugsweise Wasser.

Der Anteil des Copolymers C bezogen auf die Elektrodenbeschichtung bzw. das Trockengewicht der Elektrodentinte beträgt bevorzugt 1 Gew.-% - 50 Gew.-%, besonders bevorzugt 2 Gew.-% - 30 Gew.-%, insbesondere 3% Gew. - 15 Gew.-%.

Der Feststoffgehalt in der Elektrodentinte beträgt 5 Gew.-% - 95 Gew.-%, besonders bevorzugt 10 Gew.-% - 50 Gew.-%, insbesondere 15 Gew.-% - 30 Gew.-%.

Die Herstellung der Elektrodentinte kann beispielsweise mit Speedmixer, Dissolver, Rotor-Stator-Maschinen, Hochenergiemühlen, Planetenkneter, Rührwerkskugelmühlen, Rüttelplatten oder Ultraschallgeräten erfolgen.

Das Copolymer C ist als elektrochemisch stabiles Bindersystem für Elektrodentinten in Lithiumionenbatterien hervorragend geeignet. Durch Umwandlung des Copolymers C in das Alkali-oder Erdalkalisalz, insbesondere durch Umwandlung in das Natriumsalz wird das rheologische Verhalten des Copolymers C und dessen Wasserlöslichkeit eingestellt bzw. vorgegeben.

Damit ist das Copolymer C als Binder aus Wasser (z.B. in Form seines Natriumsalzes) und organischer Lösung (z.B. aus NMP oder Alkoholen) verarbeitbar.

Die Alkali- oder Erdalkalisalze des Copolymers C sind wasserlöslich; die Binderformulierung für Elektrodentinten kann aus wässriger Lösung verarbeitet werden.

Vorzugsweise sind mindestens 80 g/l, insbesondere mindestens 120 g/l des Copolymeren C wasserlöslich bei 25°C und 1 bar.

Die wässrige Verarbeitung ist die bevorzugte Verarbeitung vieler Anodenhersteller aus ökologischem Grund. Der Vorteil organischer Lösungen gegenüber Wasser ist die reduzierte Oberflächenoxidation der Siliciumpartikel für bessere Coulombeffizienz und bessere Langzeitstabilität (applied materials & interfaces (2010), vol 2, 3004 - 3010). Beides lässt sich mit Copolymer C als Binder realisieren.

Das Copolymer C zeichnet sich insbesondere durch eine einfache Herstellbarkeit aus, da kommerziell verfügbare Monomere verwendet werden können. Überraschenderweise kann mit Hilfe des erfindungsgemäßen Copolymers C insbesondere eine hohe Zyklenstabilität und ein geringer Innenwiderstand erreicht werden. Überaschenderweise ist der hier beschriebene Binder anders als das Homopolymer aus Vinylencarbonat auch für Siliciumanoden anwendbar und führt zu einer hohen Zyklenstabilität.

Insbesondere ist Copolymer C als Binder hervorragend geeignet für die Verarbeitung nicht aggregierter Siliciumpartikel wie sie beispielsweise aus Mahlung entstehen (siehe z.B. DE 102013211388).

Das Copolymer C ermöglicht eine einfache einstufige Formulierung einer sedimentationsstabilen Elektrodentinte aus wässriger oder organischer Lösung, die durch Rakeln auf den Elektrodenträger (= Stromsammler) direkt verarbeitet werden kann.

Lithiumionenbatterien, deren Elektrodentinten das Copolymer C enthalten, weisen eine hohe Zyklenstabilität auch bei hohen Flächenbeladungen auf. Standardbinder zeigen bei Si-haltigen Systemen eine hohe Zyklenstabilität hingegen nur bei niedrigen Flächenbeladungen.

Bevorzugt wird das Copolymer C in einer Lithium-Ionen-Batterie eingesetzt, welche Kathode, Anode, Separator und einen Elektrolyten enthält, wobei mindestens eine der Elektroden das Copolymer C enthält.

Als Kathodenmaterial können beispielsweise Li-Metall, beispielsweise als Folie, sowie Lithiumverbindungen, wie Lithiumcobaltoxid, Lithiumnickeloxid, Lithiumnickelcobaltoxid (dotiert und nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat oder Lithiumvanadiumoxide eingesetzt werden.

Der Separator ist beispielsweise eine nur für Ionen durchlässige Membran, wie sie in der Batterieherstellung bekannt ist. Der Separator trennt die Anode von der Kathode.

Der Elektrolyt enthält Lithiumsalz als Leitsalz und aprotisches Lösungsmittel.

Einsetzbare Leitsalze sind zum Beispiel $LiPF_6$, $LiBF_4$, $LiClO_4$, $LiAsF_6$, $(LiB(C_2O_4)_2, LiBF_2(C_2O_4))$, $LiSO_3C_xF_{2x+1}$, $LiN(SO_2C_xF_{2x+1})_2$ und $LiC(SO_2CxF_{2x+1})_3$, wobei x ganzzahlige Werte von 0 bis 8 einnimmt, und deren Mischungen.

Der Elektrolyt enthält vorzugsweise 0,1 mol/l bis zur Löslichkeitsgrenze des Leitsalzes, besonders bevorzugt 0,2 mol/l - 3 mol/l, insbesondere 0,5 bis 2 mol/l lithiumhaltiges Leitsatz.

Das aprotische Lösungsmittel wird vorzugsweise ausgewählt aus organischen Carbonaten, wie Dimethylcarbonat, Diethylcarbonat, Ethylmethylcarbonat, Ethylencarbonat, Vinylencarbonat, Propylencarbonat, Butylencarbonat; cyclischen und linearen Estern, wie Methylacetat, Ethylacetat, Butylacetat, Propylpropionat, Ethylbutyrat, Ethyl-isobutyrat; cyclischen und linearen Ethern, wie 2-Methyltetrahydrofuran, 1,2-Diethoxymethan, THF, Dioxan, 1,3-Dioxolan, Diisopropylether, Diethylenglycoldimethylether; Ketonen, wie Cyclopentanon, Diisopropylketon, Methyl-isobutylketon; Lactonen, wie γ-Butyrolacton; Sulfolane, Dimethylsulfoxid, Formamid, Dimethylformamid, 3-Methyl-1,3-oxazolidine-2-on Acetonitril, organischen Kohlensäureestern und Nitrilen und Gemischen dieser Lösungsmittel. Besonders bevorzugt sind die vorstehend beschriebenen organischen Carbonate.

Vorzugsweise enthält der Elektrolyt auch einen Filmbildner, wie Vinylencarbonat, Fluorethylencarbonat, Vinylethylencarbonat oder Fluoraceton, wodurch eine signifikante Verbesserung der Zyklenfestigkeit der Anode erreicht werden kann. Dies wird hauptsächlich der Bildung einer festen Elektrolytzwischenphase auf der Oberfläche der Aktivmaterialien zugeschrieben. Der Anteil des Filmbildners im Elektrolyten beträgt vorzugsweise 0,1 Gew.-% - 20,0 Gew.-%, besonders bevorzugt 0,2 Gew.-% - 15,0 Gew.-%, insbesondere 0,5 Gew.-% - 10 Gew.-%.

Der Elektrolyt kann, wie beispielsweise in DE 10027626 A beschrieben, auch weitere Additive, wie organische Isocyanate zur Herabsetzung des Wassergehaltes, HF-Fänger, Redox-Shuttle-Additive, Flammschutzmittel wie Phosphate oder Phosphonate, Lösungsvermittler für LiF, organische Lithiumsalze und/oder Komplexsalze enthalten.

Die Lithium-Ionen-Batterie kann in allen üblichen Formen in gewickelter, gefalteter oder gestapelter Form hergestellt werden.

Alle zur Herstellung der Lithium-Ionen-Batterie, wie oben beschrieben, benutzten Stoffe und Materialien sind bekannt. Die Herstellung der Teile der Batterie und ihre Zusammenfügung zur erfindungsgemäßen Batterie erfolgt nach den auf dem Gebiet der Batterieherstellung bekannten Verfahren.

In den folgenden Beispielen sind, falls jeweils nicht anders angegeben, alle Mengen- und Prozentangaben auf das Gewicht bezogen, alle Drücke 0,10 MPa (abs.) und alle Temperaturen 23°C.

Die verwendeten Lösungsmittel und Elektrolyten wurden nach Standardverfahren getrocknet und unter einer trockenen ArgonAtmosphäre aufbewahrt.

Folgende Materialien wurden aus kommerziellen Quellen bezogen und ohne weitere Reinigung direkt eingesetzt: Graphit KS6L-C (Timcal), Acrylsäure (Sigma Aldrich), Carboxymethylcellulose (CMC)(Daicel 1360), Ethanol (Sigma Aldrich), AIBN (Aza-bisisobutyrodinitril) (Sigma Aldrich), Natriumhydroxid (Sigma Aldrich), Diethylether (Sigma Aldrich), Dimethylformamid (DMF) (Sigma Aldrich).

Vinylencarbonat (Sigma Aldrich) wurde vor Einsatz über basischem $Al_2O_3$ gereinigt

Die elektrochemischen Untersuchungen wurden an einer Halbzelle in Drei-Elektroden-Anordnung (stromlose Potentialmessung) durchgeführt. Die Elektrodenbeschichtung aus dem jeweiligen Beispiel wurde als Arbeitselektrode eingesetzt, Lithium-Folie (Rockwood® Lithium, Dicke 0,5mm) als Referenz- und Gegenelektrode verwendet. Ein mit 100 μl Elektrolyt getränkter, 6-lagiger Vliesstoffstapel (Freudenberg Vliesstoffe, FS2226E) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war. Der Bau der Zelle erfolgte in einer Glovebox (< 1 ppm $H_2O$, $O_2$), der Wassergehalt in der Trockenmasse aller verwendeten Komponenten lag unterhalb von 20 ppm.

**Vergleichsbeispiel 1:PolyVC:**

Die Herstellung von PolyVC erfolgte gemäß H. Zhao et al. Journal of Power Sources 263 (2014) 288 - 295.

4,41 g einer 22 Gew.-%igen Silicium-Suspension in Ethanol mit einer Partikelgröße von d50= 180nm (nicht aggregierte Siliciumpartikel vgl. z.B. DE 102013211388) und 0,60 g Leitruß (Timcal® Super C65) wurden in 15,00 g einer 2,5 Gew.-%igen Lösung von PolyVC, in DMF mittels SpeedMixer bei einer Drehzahl von 2500 rpm für 5 min und anschließend mittels Dissolver bei einer Umlaufgeschwindigkeit von 9 m/s für 15 min unter Kühlung bei 20°C dispergiert. Nach Zugabe von 2,83 g Graphit (Timcal® SFG6) und 9,0 g DMF wurde dann mittels SpeedMixer bei einer Drehzahl von 2500 rpm für 5 min und mittels Dissolver bei einer Umlaufgeschwindigkeit von 8 m/s für 15 min gemischt. Nach Entgasen im SpeedMixer wurde die Dispersion mittels eines Filmziehrahmens mit 0,25 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 2,51 mg/cm$^2$.

Die elektrochemische Testung wurde bei 20°C durchgeführt. Als Potentialgrenzen wurden 40 mV und 1,0 V vs. Li/Li+ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

Die Elektrodenbeschichtung aus Vergleichsbeispiel 1 hatte eine reversible Anfangskapazität von etwa 522 mAh/g und besaß nach 70 Lade-/Entladezyklen in etwa 28 % ihrer ursprünglichen Kapazität, nach 100 Zyklen 22% ihrer ursprünglichen Kapazität.

**Beispiel 2 Poly(VC-co-AA):**

**Einwaagen:**

    2,35 g Vinylencarbonat= 27 mmol
    1,95 g Acrylsäure= 27 mmol
    0,05 g = 0,06 mmol AIBN

**Durchführung:**

Die beiden Monomere wurden ohne Zusatz von Lösemittel ineinander gelöst und mit der Hälfte des AIBN (0,025 g) in einen 50 ml 3-Halskolben versetzt und entgast.

Anschließend wurde bei 70°C polymerisiert. Nach 3h wurde die restliche Menge AIBN (0,025 g) zugegeben und 16 h bei 70°C weiterpolymerisiert.

**Aufarbeitung:**

Das Polymer wurde in 30 ml DMF bei 90°C gelöst und aus 50 ml Diethylether umgefällt. Das Polymer wurde unter Vakuum bei 70°C getrocknet.
Mn=2500 g/mol (GPC)

**Neutralisation:**

    0,6 g Polymer wurden in 5,0 g DMF gelöst.
    45 mg NaOH wurden in 0,5 g Wasser gelöst.

**Durchführung:**

Die wässrige NaOH wurde tropfenweise in die Polymerlösung eingerührt.
Es fällt ein Niederschlag aus, der durch Zugabe von Wasser wieder aufgelöst wird. Es wird solange Wasser zugegeben, bis ein Festgehalt von 2 Gew% erreicht wird (=2,5%ige Binderlösung).

4,41 g einer 22 Gew.-%igen Silizium-Suspension in Ethanol mit einer Partikelgröße von d50= 180nm (nicht aggregierte Siliciumpartikel) und 0,6 g Leitruß (Timcal® Super C65) wurden in 15,00 g der oben genannten Binderlösung mittels SpeedMixer bei einer Drehzahl von 2500 rpm für 5 min und anschließend mittels Dissolver bei einer Umlaufgeschwindigkeit von 9 m/s für 15 min unter Kühlung bei 20°C dispergiert. Nach Zugabe von 2,83 g Graphit (Timcal® SFG6) und 7 g Wasser wurde dann mittels SpeedMixer bei einer Drehzahl von 2500 rpm für 5 min und mittels Dissolver bei einer Umlaufgeschwindigkeit von 8 m/s für 15 min gemischt. Nach Entgasen im SpeedMixer wurde die Dispersion mittels eines Filmziehrahmens mit 0,25 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 2,51 mg/cm$^2$.

Die elektrochemische Testung wurde bei 20°C durchgeführt. Als Potentialgrenzen wurden 40 mV und 1,0 V vs. Li/Li+ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

Die Elektrodenbeschichtung aus Beispiel 2 hatte eine reversible Anfangskapazität von etwa 716 mAh/g und besaß nach 70 Lade-/Entladezyklen noch ungefähr 99 % ihrer ursprünglichen Kapazität. Nach 100 Lade-/Entladezyklen besaß sie ungefähr 84 % ihrer ursprünglichen Kapazität.

**Vergleichsbeispiel 3: CMC-Binder**

4,41 g einer 22 Gew.-%igen Silizium-Suspension in Ethanol mit einer Partikelgröße von d50= 180nm (nicht aggregierte Siliciumpartikel) und 0,6 g Leitruß (Timcal® Super C65) wurden in 15,00 g einer 2,5 Gew.-%igen Lösung CMC, in Wasser mittels SpeedMixer bei einer Drehzahl von 2500 rpm für 5 min und anschließend mittels Dissolver bei einer Umlaufgeschwindigkeit von 9 m/s für 15 min unter Kühlung bei 20°C dispergiert. Nach Zugabe von 2,83 g Graphit (Timcal® SFG6) und 4 g Wasser wurde dann mittels SpeedMixer bei einer Drehzahl von 2500 rpm für 5 min und mittels Dissolver bei einer Umlaufgeschwindigkeit von 8 m/s für 15 min gemischt. Nach Entgasen im SpeedMixer wurde die Dispersion mittels eines Filmziehrahmens mit 0,25 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 2,20 mg/cm$^2$.

Die elektrochemische Testung wurde bei 20°C durchgeführt. Als Potentialgrenzen wurden 40 mV und 1,0 V vs. Li/Li+ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

Die Elektrodenbeschichtung aus Vergleichsbeispiel 3 hatte eine reversible Anfangskapazität von etwa 694 mAh/g und besaß nach 70 Lade-/Entladezyklen in etwa 78 % ihrer ursprünglichen Kapazität, nach 100 Zyklen in etwa 64% ihrer ursprünglichen Kapazität.

Tabelle 1 : Kapazitäts- und Widerstandsverläufe über 70 bzw. 100 Zyklen.

| Material | Binder | Reversible Anfangskapazität [mAh/g] | Kapazitätserhalt nach 70 / 100 Zyklen [%] | Innenwiderstand nach 70 / 100 Zyklen [mOhm/cm$^2$] |
|---|---|---|---|---|
| VBsp. 1* | PolyVC | 522 | 28/ 22 | 152,6 / 183,6 |
| Bsp. 2 | Poly (VCco-AA) | 744 | 99 / 84 | 33,5 / 31,7 |
| VBsp. 3* | CMC | 694 | 78 / 64 | 72,5 / 119,0 |
| *nicht erfindungsgemäß | | | | |

Die Bestimmung des Innenwiderstandes erfolgte durch Anlegen eines Stroms von 200 mA/g an die nicht Strom belastete Zelle mit vollständig delithiierter Si-Elektrode. Aus der Differenz der Zellspannungen im unbelasteten und belasteten (gemessen nach 1 Sekunde) Zustand wurde über das ohmsche Gesetz der Innenwiderstand berechnet:

$$R \times A = \Delta U \; / \; I$$

(R= Innenwiderstand, A= Elektrodenfläche, $\Delta U$= Spannungsdifferenz unbelastet/belastet, I= Strom)

Das Beispiel 2 zeigte gegenüber dem Vergleichsbeispiel 1 eine deutlich höhere Anfangskapaziät (=höhere Nutzung der theoretischen Kapazität) bei gleichzeitig höherer Kapazitätsretention. Lediglich Beispiel 2, wies nach 100 Zyklen noch eine hohe Zyklenstabilität mit einer Kapazitätsretention von >80% auf. Vergleichsbeispiel 3 mit CMC als Standardbinder wies eine höhere Stabiltität als PolyVC auf. Jedoch konnte aufgrund des deutlichen Anstiegs des Innenwiderstands bei den hohen Beladungen nicht die Zyklenfestigkeit des erfindungsgemäßen Poly(VC-co-AA) Binders aus Beispiel 2 erreicht werden.

**Patentansprüche**

1. Elektrodenbeschichtung für eine Lithium-Ionen-Batterie, welche Copolymer C, herstellbar durch Polymerisation von zusammen mehr als 70% Gew.-% an vinylfunktionellem zyklischem Carbonat und einem oder mehreren Monomeren aus der Gruppe der Acrylsäure und deren Derivaten, wobei der Gewichtsanteil an vinylfunktionellem zyklischem Carbonat bezogen auf das Gewicht aller eingesetzten Monomere 5 - 90% beträgt, oder das Salz davon enthält, wobei die Elektrodenbeschichtung das Aktivmaterial Silicium enthält.

2. Elektrodenbeschichtung nach Anspruch 1, bei dem im Copolymer C der Gewichtsanteil an Acrylsäure bezogen auf das Gewicht aller eingesetzten Monomere 30 - 85% beträgt.

3. Elektrodenbeschichtung nach einem oder mehreren der vorangehenden Ansprüche, bei der das Copolymer C herstellbar ist ausschliesslich aus den in Anspruch 1 genannten Monomeren.

4. Elektrodenbeschichtung nach einem oder mehreren der vorangehenden Ansprüche, bei der im Copolymer C das Zahlenmittel der Molmasse Mn = 500 - 30000 beträgt.

5. Elektrodenbeschichtung nach einem oder mehreren der vorangehenden Ansprüche, welche das Natrium oder Lithiumsalz des Copolymers C nach einem oder mehreren der vorangehenden Ansprüche enthält.

**Claims**

1. Electrode coating for a lithium ion battery, which contains copolymer C which can be prepared by polymerization of together more than 70% by weight of vinyl-functional cyclic carbonate and one or more monomers from the group consisting of acrylic acid and derivatives thereof, where the proportion by weight of vinyl-functional cyclic carbonate based on the weight of all monomers used is 5 - 90%, or contains the salt thereof, where the electrode coating contains the active material silicon.

2. Electrode coating according to Claim 1, wherein the proportion by weight of acrylic acid in the copolymer C based on the weight of all monomers used is 30 - 85%.

3. Electrode coating according to one or both of the preceding claims, wherein the copolymer C can be prepared exclusively from the monomers mentioned in Claim 1.

4. Electrode coating according to one or more of the preceding claims, wherein the number average molar mass of the copolymer C is Mn = 500 - 30 000.

5. Electrode coating according to one or more of the preceding claims which contains the sodium or lithium salt of the copolymer C according to one or more of the preceding claims.

**Revendications**

1. Revêtement d'électrode pour une batterie lithium-ion, qui contient un copolymère C, qui peut être fabriqué par polymérisation d'au total plus de 70 % en poids de carbonate cyclique à fonction vinyle et d'un ou de plusieurs monomères du groupe constitué par l'acide acrylique et ses dérivés, la proportion en poids de carbonate cyclique à fonction vinyle par rapport au poids de tous les monomères utilisés étant de 5 à 90 %, ou le sel de celui-ci, le revêtement d'électrode contenant le matériau actif silicium.

2. Revêtement d'électrode selon la revendication 1, dans lequel la proportion en poids d'acide acrylique dans le copolymère C, par rapport au poids de tous les monomères utilisés, est de 30 à 85 %.

3. Revêtement d'électrode selon une ou plusieurs des revendications précédentes, dans lequel le copolymère C peut être fabriqué exclusivement à partir des monomères indiqués dans la revendication 1.

**4.** Revêtement d'électrode selon une ou plusieurs des revendications précédentes, dans lequel la moyenne en nombre de la masse molaire Mn = 500 à 30 000 dans le copolymère C.

**5.** Revêtement d'électrode selon une ou plusieurs des revendications précédentes, qui contient le sel de sodium ou de lithium du copolymère C selon une ou plusieurs des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040126668 A1
- JP H06223842 A
- DE 102013211388
- DE 10027626 A

**In der Beschreibung aufgeführte Nicht-Patentliteratur**

- **ZHAO et al.** *Journal of Power Sources,* 2014, vol. 263, 288-295
- **A.J. APPLEBY et al.** *J. Power Sources,* 2007, vol. 163, 1003-1039
- *J. Electrochem. Soc.,* 2009, vol. 156, A103-A113
- Vysokomolekulyarnye Soedineniya. *Seriya B: Kratkie Sooshcheniya,* 1968, vol. 10 (3), 220-2
- **SMETS et al.** *Jour. Pol. Sci., Vol,* 1958, vol. 27, 275-283
- *materials & interfaces,* 2010, vol. 2, 3004-3010
- **H. ZHAO et al.** *Journal of Power Sources,* 2014, vol. 263, 288-295